Europäisches Patentamt

European Patent Office

Office européen des brevets

(11) Veröffentlichungsnummer: **0 384 178**
**A2**

(12) **EUROPÄISCHE PATENTANMELDUNG**

(21) Anmeldenummer: **90101990.1**

(22) Anmeldetag: **01.02.90**

(51) Int. Cl.⁵: **B60L 5/40**

(30) Priorität: **24.02.89 DE 8902224 U**

(43) Veröffentlichungstag der Anmeldung:
**29.08.90 Patentblatt 90/35**

(84) Benannte Vertragsstaaten:
**DE FR IT**

(71) Anmelder: **WAMPFLER GMBH**
**Rheinstrasse 27 Postfach 19 28**
**D-7858 Weil am Rhein-Märkt(DE)**

(72) Erfinder: **Bormann, Uwe**
**Ringstrasse 12**
**D-7851 Rümmingen(DE)**
Erfinder: **Görner, Dieter**
**Bergwerkstrasse 42**
**D-7862 Hausen i.W.(DE)**

(74) Vertreter: **Charrier, Rolf, Dipl.-Ing.**
**Postfach 260 Rehlingenstrasse 8**
**D-8900 Augsburg 31(DE)**

(54) Stromabnehmerwagen.

(57) Ein Stromabnehmerwagen (1) ist an Rollen (4, 5, 9) längs einer Tragschiene verfahrbar, wobei die Rollen (4, 5, 9) von Rollenträgern (2, 3) gelagert werden. Längs der Tragschiene verlaufen Schleif-schienen (11), in welche Schleifkontakte (12) des Stromabnehmerwagens (1) federnd eingreifen. Damit diese Schleifkontakte (12) rasch ausgetauscht wer-den können, werden sie von einem gemeinsamen austauschbaren Gehäuseteil (13) gelagert, mit dem die Rollenträger (2, 3) über jeweils eine Schnell-kupplung (22, 23, 24) verbindbar sind.

FIG. 1

EP 0 384 178 A2

Die Neuerung betrifft einen Stromabnehmerwagen nach dem Oberbegriff des Anspruches 1.

Ein bekannter Stromabnehmerwagen weist einen Rollenträger mit zwei im Abstand angeordneten Rollenpaaren auf, womit dieser Stromabnehmerwagen längs einer C-Schiene verfahrbar ist. Oberhalb der C-Schiene verlaufen untereinander angeordnete Stromschienen. Mit dem Rollenträger verbunden ist ein vertikaler Haltearm, an welchem horizontal verlaufende Schleifarme angelenkt sind, die an ihrem vorderen freien Ende Schleifkontakte tragen, die in Kontakt mit den Stromschienen stehen. Die Schleifarme werden mittels Federn gegen die Stromschienen gedrückt.

Zum Wechseln der Schleifkontakte ist es erforderlich, jeden Schleifarm gegen den Druck der Feder von der Stromschiene wegzuschwenken, damit der Schleifkontakt zugänglich wird, entfernt und durch einen neuen ersetzt werden kann. Diese Arbeit ist zeitaufwendig.

Ein weiterer Nachteil ist darin zu sehen, daß es für die Abnahme des Stromabnehmerwagens von der Tragschiene erforderlich ist, diesen bis an das Ende der Tragschiene zu verfahren, um ihn dort aus der Tragschiene herausfahren zu können.

Es besteht die Aufgabe, den Stromabnehmerwagen so auszubilden, daß die Schleifkontakte in kurzer Zeit ausgetauscht werden können. In seiner Weiterbildung soll er so ausgebildet sein, daß er an jeder beliebigen Stelle von der Tragschiene entfernbar ist.

Gelöst wird diese Aufgabe mit den kennzeichnenden Merkmalen des Anspruches 1. Vorteilhafte Ausgestaltungen sind den Unteransprüchen entnehmbar.

Ein Ausführungsbeispiel wird nachfolgend an Hand der Zeichnungen näher erläutert. Es zeigen:

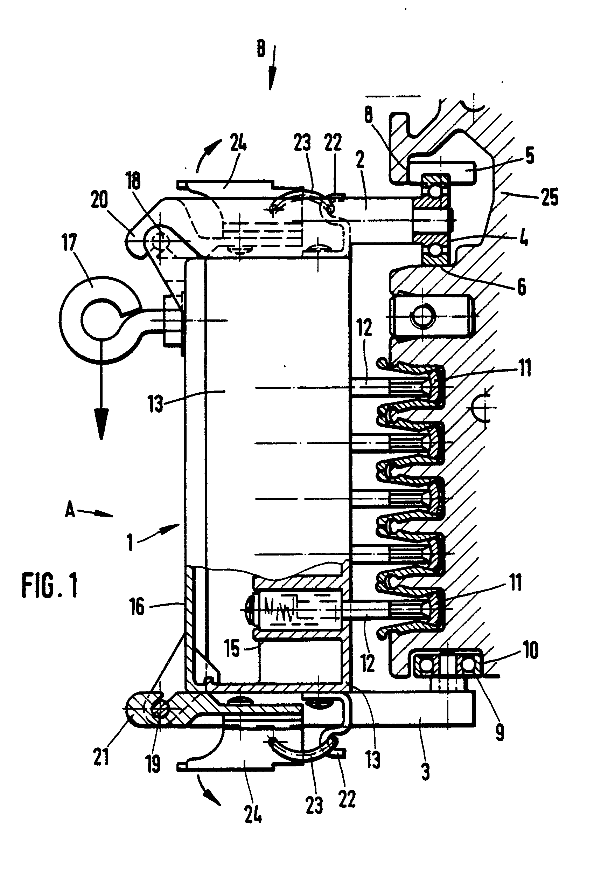

Fig. 1: eine teilweise im Schnitt dargestellte Seitenansicht des Stromwagens bei im Schnitt dargestellter Tragschiene;

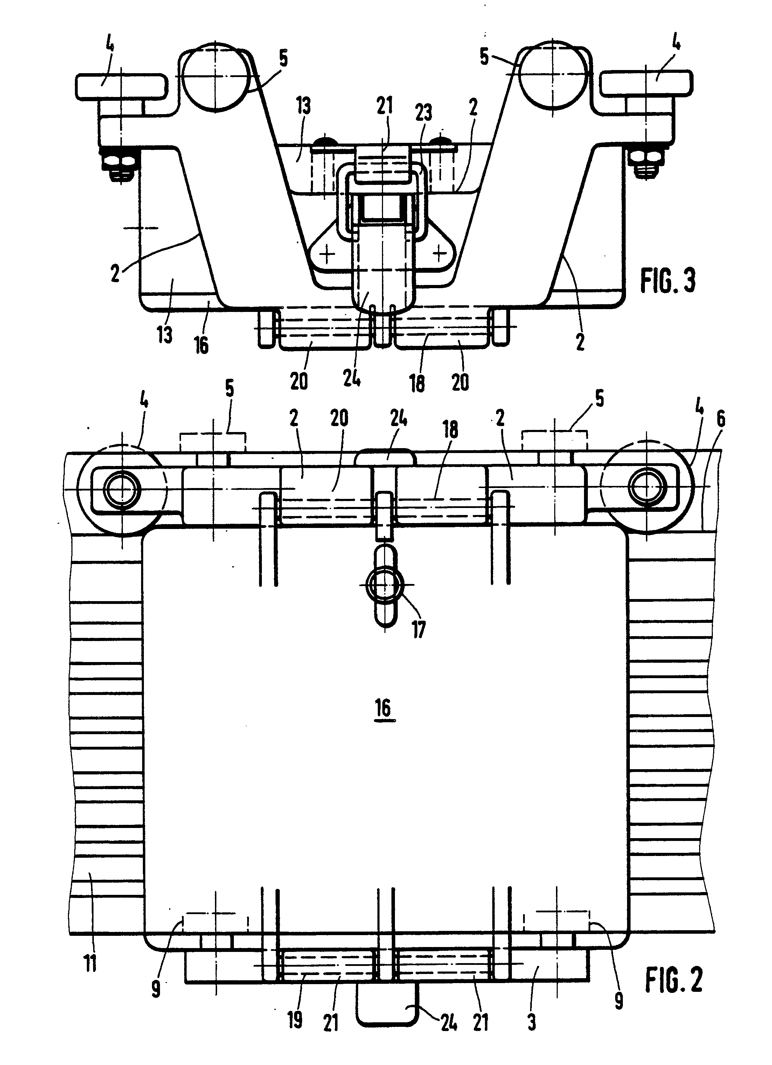

Fig. 2: eine Ansicht des Stromabnehmerwagens und der Tragschiene, gesehen in Pfeilrichtung A nach Figur 1 und

Fig. 3: eine Draufsicht auf den Stromabnehmerwagen gesehen in Pfeilrichtung B nach Figur 1.

Der Stromabnehmerwagen 1 weist einen oberen Rollenträger 2 und einen unteren Rollenträger 3 auf. Der obere Rollenträger 2 lagert ein Tragrollenpaar 4 sowie ein Stützrollenpaar 5. Das Tragrollenpaar 4 weist horizontale Drehachsen auf und läuft auf einer horizontal verlaufenden Tragbahn 6 der Tragschiene 7. Das Stützrollenpaar 5 weist vertikale Drehachsen auf und läuft längs einer vertikalen Stützbahn 8 der Tragschiene 7. Die Stützbahn 8 ist dem Stromabnehmerwagen 1 abgewendet.

Der untere Rollenträger 3 lagert zwei weitere Stützrollen 9 mit einer vertikalen Drehachse, die längs einer weiteren Stützbahn 10 verfahrbar sind, die dem Leitungswagen 1 zugewandt ist.

Längs der Tragschiene 7 verlaufen fünf Stromschienen 11, die voneinander und von der Tragschiene isoliert sind. Mit den Stromschienen 11 stehen Schleifkontake 12 des Stromabnehmerwagens 1 in Kontakt.

Der Stromabnehmerwagen 1 weist ein rechtekkiges topfförmiges Gehäuseteil 13 auf. In diesem Gehäuseteil 13 sind untereinander fünf Kammern 14 vorgesehen, die jeweils einen Schleifkontakt 12 mit seinem gehäuseseitigem Ende lagern, der jeweils durch eine Feder 15 in Richtung seiner Stromschiene 11 gedrückt wird.

Die der Tragschiene 7 abgewandte Seite des Gehäuseteils 13 ist verschlossen durch einen Dekkel 16. Mit dem Gehäuseteil 13 ist eine Hängeöse 17 verschraubt, die den Deckel 16 gegen das Gehäuseteil 13 drückt. Oben und unten weist der Deckel 16 jeweils eine Scharnierachse 18, 19 auf, wobei in die Scharnierachse 18 der obere Rollenträger 2 und in die Scharnierachse 19 der untere Rollenträger 3 eingeklippt sind. Die Scharnierklipps sind mit 20 und 21 bezeichnet.

Am Gehäuseteil 13 sind oben und unten jeweils ein Haken 22 befestigt. In diese Haken sind eingehängt Drahtbügel 23, die jeweils von einem Kippteil 24 gelagert werden. Diese Kippteile 24 sind jeweils gelenkig am oberen und unteren Rollenträger 2, 3 gelagert. Die Teile 22 bis 24 bilden somit eine Schnellkupplung in Form eines Schnellverschlusses, der gelöst werden kann, wenn die Kippteile 24 von Hand in Pfeilrichtung geschwenkt werden.

Wird das untere Kippteil 24 in Pfeilrichtung betätigt, dann wird die Verbindung des unteren Rollenträgers 3 mit dem Gehäuseteil 13 gelöst, so daß dieser nunmehr um die Scharnierachse 19 nach unten schwenken kann. Wird das obere Kippteil 24 ebenfalls in Pfeilrichtung geschwenkt, sodann die Scharnierachse 18 aus dem Klipp 20 ausgeklippt, dann sind auf diese Weise das Gehäuseteil 13 mit dem Deckel 16 entfernbar. Wird sodann die Hängeöse 17 ausgeschraubt, dann kann das Gehäuseteil 13 mit den Schleifkontakten 12 gegen ein anderes Gehäuseteil 13 mit neuen Schleifkontakten 12 ausgetauscht werden, während dieses Austausches kann der obere Rollenträger 2 an der Tragschiene 7 verbleiben. Es ist jedoch auch möglich, diesen zu entfernen, indem er im Uhrzeigersinn gekippt wird. Zu diesem Zweck ist die Ausnehmung 25, an der die Bahnen 6, 8 angeformt sind C-förmig ausgebildet und weist eine horizontale Ausdehnung auf, die größer ist als der Durchmesser der Stützrolle 5.

Die Montage erfolgt in umgekehrter Reihenfolge wie die Demontage. Durch die Lösbarkeit der Rollenträger 2, 3 vom Gehäuseteil 13, ist es auch möglich, diese auszutauschen, wenn deren Rollen verschlissen sind.

Die Hängeöse 17 dient zum Befestigen beispielsweise von Werkzeugen, welche vom Stromabnehmerwagen 1 über die Stromschienen 11 und die Schleifkontake 12 mit Strom versorgt werden.

Bei nach unten geschwenktem Rollenträger 3 ist es auch möglich, ohne Öffnen des oberen Schnellverschlusses den Stromabnehmerwagen 1 abzunehmen, indem dieser um die C-förmige Ausnehmung 25 im Uhrzeigersinn gekippt wird.

## Ansprüche

1. Stromabnehmerwagen, der über Rollen längs einer Tragschiene verfahrbar ist, die Rollen von mindestens einem Rollenträger des Stromabnehmerwagens gelagert werden, längs der Tragschiene voneinander isolierte Stromschienen verlaufen und der Stromabnehmerwagen Schleifkontakte aufweist, die in federndem Eingriff mit den Stromschienen stehen, dadurch **gekennzeichnet**, daß die Schleifkontakte (12) von einem gemeinsamen Gehäuseteil (13) gelagert werden, das als austauschbare Einheit über eine lösbare Schnellkupplung mit dem mindestens einen Rollenträger (2, 3) verbunden ist.

2. Stromabnehmerwagen nach Anspruch 1, dadurch **gekennzeichnet**, daß die Schnellkupplung aus einem Schnellverschluß in Form eines an einem Kippteil (24) gelenkig befestigten Drahtbügels (23) besteht, der mit einem Haken (22) verrastet.

3. Stromabnehmerwagen nach Anspruch 2, dadurch **gekennzeichnet**, daß der Haken (22) am Gehäuseteil (13) und das Kippteil (24) mit dem Drahtbügel (23) am Rollenträger (2, 3) angeordnet sind.

4. Stromabnehmerwagen nach einem der Ansprüche 1 bis 3, dadurch **gekennzeichnet**, daß an zwei einander gegenüberliegenden Seiten des Gehäuseteils (13) lösbar Rollenträger (2, 3) angeordnet sind.

5. Stromabnehmerwagen nach Anspruch 4, dadurch **gekennzeichnet**, daß die beiden Seiten die Ober- und die Unterseite sind, am unteren Rollenträger (3) mindestens eine Stützrolle (9) mit vertikaler Drehachse und am oberen Rollenträger (2) mindestens eine Tragrolle (4) mit horizontaler Drehachse und eine Stützrolle (5) mit vertikaler Drehachse angeordnet sind.

6. Stromabnehmerwagen nach einem der Ansprüche 1 bis 5, dadurch **gekennzeichnet**, daß die den Schleifkontakten (12) abgewandte Seite des Gehäuseteils (13) durch einen Deckel (16) verschlossen ist.

7. Stromabnehmerwagen nach einem der Ansprüche 1 bis 6, dadurch **gekennzeichnet**, daß an ihm eine Tragvorrichtung (17) lösbar befestigt ist.

8. Stromabnehmerwagen nach Anspruch 7, dadurch **gekennzeichnet**, daß die Tragvorrichtung (17) mit dem Gehäuseteil (13) verschraubt ist und im verschraubten Zustand den Deckel (16) gegen das Gehäuseteil (13) hält.

9. Stromabnehmerwagen nach Anspruch 8, dadurch **gekennzeichnet**, daß der untere Rollenträger (3) am Deckel (16) um eine horizontale Achse (19) schwenkbar und lösbar gelagert ist.

10. Stromabnehmerwagen nach Anspruch 8 oder 9, dadurch **gekennzeichnet**, daß der obere Rollenträger (2) am Deckel (16) um eine horizontale Achse (18) schwenkbar und lösbar gelagert ist.

11. Stromabnehmerwagen nach einem der Ansprüche 5 bis 10, dadurch **gekennzeichnet**, daß die Tragrolle (4) sich auf einer horizontalen Tragbahn (6) und die obere Stützrolle (5) sich auf einer vertikalen Stützbahn (8) einer C-förmigen Ausnehmung (25) der Tragschiene (7) abstützt, die eine horizontale Ausdehnung aufweist, welche größer ist als der Durchmesser der Stützrolle (5).

12. Stromabnehmerwagen nach einem der Ansprüche 1 bis 11, dadurch **gekennzeichnet**, daß das Gehäuseteil (13) die Schleifkontakte (12) lagernde Kammern (14) aufweist, in denen Federn (15) die Schleifkontakte (12) in Richtung der Stromschienen (11) drücken.

FIG. 1

FIG. 3

FIG. 2